# EUROPÄISCHE PATENTSCHRIFT

(11) **EP 4 202 271 B1**
(45) Veröffentlichungstag und Bekanntmachung des Hinweises auf die Patenterteilung: **11.09.2024**
(21) Anmeldenummer: 21217230.8
(22) Anmeldetag: 23.12.2021
(51) Int. Cl.: F16K 31/06

(54) **FLUIDVENTIL MIT EINER MAGNETISCHEN ANTRIEBSEINHEIT**
FLUID VALVE WITH A MAGNETIC DRIVE UNIT
SOUPAPE À FLUIDE DOTÉE D'UNE UNITÉ D'ENTRAÎNEMENT MAGNÉTIQUE

(43) Veröffentlichungstag der Anmeldung: 28.06.2023
(73) Patentinhaber: AVS, Ingenieur J.C. Römer GmbH, 94481 Grafenau (DE)
(72) Erfinder: Fisch, Rainer, 94051 Hauzenberg (DE)
(74) Vertreter: Wolf, Gerhard

(56) Entgegenhaltungen:
- EP-A2- 1 348 862
- DE-A1- 10 107 115
- DE-A1- 102010 055 025
- DE-A1- 102013 220 557
- DE-A1- 2 426 748

## Beschreibung

Die Erfindung betrifft ein Fluidventil mit einer magnetischen Antriebseinheit, mittels der ein Ventilschließköper bewegbar ist.

Fluidventile mit einem magnetischen Antrieb sind bereits bekannt. Insbesondere sind Fluidventile bekannt, bei denen ein Anker durch das Applizieren eines Magnetfeldes linear bewegt, d.h. verschoben, wird.

Diese Linearbewegung wird in eine Schwenkbewegung eines Ventilschließkörpers umgesetzt. Abhängig von der Schwenkbewegung des Ventilschließkörpers wird ein Freigeben bzw. Verschließen eines Fluidkanals im Fluidventil bewirkt.

Die Druckschrift DE 10 2010 055 025 A1 offenbart ein Elektromagnetventil mit einem axial verschiebbaren Anker.

Die Druckschrift EP 1 348 862 A2 offenbart eine elektromagnetische Stellvorrichtung mit einem verschiebbaren Anker.

Die Druckschrift DE 101 07 115 A1 offenbart ein Drucksteuerventil mit einem verschiebbaren Anker.

Die Druckschrift DE 10 2013 220 557 A1 offenbart eine Ventilanordnung mit einem verschwenkbaren Anker.

Ein wesentlicher Nachteil bekannter Fluidventile besteht darin, dass diese aufwändig herzustellen und damit teuer sind. Zudem muss zumindest eine Endstellung des Ankers durch Justieren eines Anschlags kalibriert werden, um ein definiertes Schließverhalten des Ventils zu erreichen. Dies verteuert zusätzlich die Kosten des Fluidventils.

Ausgehend hiervon ist es Aufgabe der Erfindung, ein Fluidventil anzugeben, das kostengünstig herstellbar ist und ein definiertes Schalt- bzw. Schließverhalten ohne die Notwendigkeit einer finalen Justierung bietet.

Die Aufgabe wird durch ein Fluidventil mit den Merkmalen des unabhängigen Patentanspruchs 1 gelöst. Bevorzugte Ausführungsformen sind Gegenstand der Unteransprüche. Ein Verfahren zur Herstellung eines Fluidventils ist Gegenstand des nebengeordneten Patentanspruchs 14.

Gemäß einem Aspekt wird ein Fluidventil mit einer Antriebseinheit für einen Ventilschließkörper offenbart. Die Antriebseinheit weist einen Kern, eine abschnittsweise den Kern umgebende elektrische Spule und einen durch die Bestromung der Spule und die daraus resultierende Magnetkraft bewegbaren Anker auf. Der Anker ist mit dem Ventilschließkörper derart gekoppelt, dass eine Bewegung des Ankers eine Bewegung des Ventilschließkörpers bewirkt. Die Antriebseinheit weist einen Grundkörper auf, an dem eine Aufnahme für die Spule, zumindest eine Einschuböffnung für den Kern und eine Ankeraufnahme vorgesehen ist. Der Grundkörper bildet vorzugsweise die tragende Struktur der Antriebseinheit. Die Ankeraufnahme dient der Aufnahme und Lagerung des Ankers. Der in die zumindest eine Einschuböffnung eingeführte Kern ist mittels einer Umspritzung derart am Grundkörper fixiert, dass der Kern eine definierte Lage relativ zur Ankeraufnahme einnimmt.

Der technische Vorteil des Fluidventils besteht darin, dass beim Umspritzen und damit bei der Fixierung der Einschubposition des Kerns im Grundkörper die Lage des Kerns relativ zu der Ankeraufnahme sehr exakt festgelegt werden kann, so dass der Herstellungsprozess des Fluidventils vereinfacht wird und darüber hinaus eine Nachjustierung der Lage des Kerns relativ zum Anker vermieden werden kann.

Gemäß einem Ausführungsbeispiel ist der Kern durch die Umspritzung derart gegen eine Verschiebung relativ zum Grundkörper gesichert, dass die zumindest eine Polfläche des Kerns eine vorgegebene Lage relativ zu der Ankeraufnahme einnimmt. Dadurch wird erreicht, dass der in der Ankeraufnahme eingefügte Anker eine definierte Position relativ zu der zumindest einen Polfläche einnimmt und damit ein definierte Krafteinleitung in den Anker bzw. ein definiertes Schaltverhalten erreicht wird. Vorzugsweise ist die Lage der zumindest einen Polfläche relativ zum Kern derart gewählt, dass im bestromten Zustand der Spule und damit bei zur Polfläche hinbewegtem Anker noch ein Luftspalt zwischen der Anker und der Polfläche verbleibt. Der Luftspalt ist vorzugsweise kleiner als 1 mm, besonders bevorzugt kleiner als 0,5mm gewählt.

Gemäß einem Ausführungsbeispiel umgibt die Umspritzung den Kern und die Spule haubenartig und stellt eine Verbindung mit dem Grundkörper her. Dadurch wird zum einen erreicht, dass der Kern und die Spule durch die Umspritzung gegen äußere Einflüsse geschützt umschlossen werden, zum anderen wird damit die Fixierung des Kerns in der gewünschten Einschubstellung erreicht.

Gemäß einem Ausführungsbeispiel ist der Kern U-förmig ausgebildet. Dadurch wird ein joch- bzw. bügelartiger Kern gebildet, der ein Paar von Polflächen aufweist. Die beiden Polflächen sind dabei beabstandet zueinander in einer Ebene angeordnet. Dadurch kann mittels des Ankers ein geschlossener Magnetkreis erreicht werden.

Gemäß einem Ausführungsbeispiel überspannt der Anker ein Paar von Polflächen des Kerns und ist durch die Bestromung der Spule um eine senkrecht zur Längsachse des Ankers verlaufende Schwenkachse verschwenkbar. In anderen Worten verläuft die Schwenkachse parallel zu einer Ebene, in der die Polflächen des Kerns angeordnet sind. Die Schwenkachse liegt vorzugsweise unterhalb des Paars von Polflächen, die in Richtung der Längsachse des Ankers gesehen übereinander angeordnet sind. Dadurch lässt sich der Anker relativ zu der Ebene der Polflächen verschwenken und dabei der magnetische Kreis bei Bestromung der Spule schließen.

Gemäß einem Ausführungsbeispiel ist der Anker relativ zu der Ebene, in der die Polflächen des Kerns angeordnet sind, verschwenkbar, und zwar derart, dass der Anker im bestromten Zustand in eine erste Schwenkstellung zu den Polflächen hin geschwenkt und im stromlosen Zustand in eine zweite Schwenkstellung positioniert wird, in der die Längsachse des Ankers von der Ebene der Polflächen schräg absteht. Das Herausschwenken aus der Ebene erfolgt vorzugsweise mittels der Federkraft einer Feder, die im bestromten Zustand der Spule verformt wird. In der ersten Schwenkstellung ist der Anker vorzugsweise mit geringem Abstand, beispielsweise kleiner als 1mm, insbesondere kleiner als 0,5mm von den Polflächen entfernt, d.h. es erfolgt keine direkte Anlage an die Polflächen. In der ersten Schwenkstellung ist der magnetische Kreis geschlossen. In der zweiten Schwenkstellung beträgt der Abstand des Ankers von den Polflächen (insbesondere zu der am weitesten entfernten Polfläche) maximal 5mm, insbesondere 4mm, 3mm oder 2mm, besonders bevorzugt 1mm oder weniger, beispielsweise 0,8mm oder im Wesentlichen 0,8mm. Aufgrund des geringen Hubs der Schwenkbewegung wird eine hohe Krafteinleitung in den Anker und damit eine hohe Stellkraft erzeugt.

Gemäß einem Ausführungsbeispiel ist der Kern durch mehrere geschichtet und deckungsgleich angeordnete, metallische Flachmaterialstücke gebildet. Dadurch kann der Kern im Vergleich zu einem einstückig hergestellte Kern kostengünstig hergestellt werden.

Gemäß einem Ausführungsbeispiel sind die Flachmaterialstücke Stanzblechteile. Die Verwendung von Stanzblechteilen unterstützt zudem eine kostengünstige Herstellung des Kerns.

Gemäß einem Ausführungsbeispiel liegen die Flachmaterialstücke des Kerns elektrisch leitend gegeneinander an. Dadurch hat der Kern elektrische bzw. magnetische Eigenschaften ähnlich eines aus einem Vollmaterial einstückig gebildeten Kerns.

Gemäß der Erfindung weist die Ankeraufnahme eine Lagerstelle für den Anker auf, an der der Anker relativ zum Grundkörper schwenkbar gelagert ist. Dadurch wird erreicht, dass der Anker im bestromten Zustand zu den Polflächen hin und im unbestromten Zustand von den Polflächen weg verschwenkbar ist. Diese Schwenkbewegung wird derart auf den Ventilschließkörper übertragen, dass dieser eine Offen- bzw. Schließbewegung vollzieht.

Gemäß einem Ausführungsbeispiel ist die Lagerstelle eine Gleitlagerstelle, die ein Flächenlager für einen kreisbogenförmigen Lagerabschnitt des Ankers bildet. Damit wird ein einfacher Aufbau der Antriebseinheit erreicht, da die Lagerung durch das Einsetzen des Ankers in die Ankeraufnahme realisiert ist.

Gemäß einem Ausführungsbeispiel ist der Grundkörper durch ein Kunststoffspritzgussteil gebildet. Dieses Kunststoffspritzgussteil bildet dabei das Basisteil der Antriebseinheit. Die Verwendung eines Kunststoffspritzgussteils ermöglicht eine kostengünstige Herstellung des Grundkörpers.

Gemäß einem Ausführungsbeispiel weist der Grundkörper einen rohrförmig ausgebildeten Einführabschnitt für den Kern auf, in den der Kern abschnittsweise einschiebbar ist. Der Einführabschnitt bildet zudem die Aufnahme, auf die die Wicklung der Spule außenseitig aufgebracht ist. Damit bildet der Grundkörper sowohl eine Führungsstruktur für den einschiebbaren Kern als auch die Spulenaufnahme aus. Dadurch wird der Herstellungsprozess der Antriebseinheit des Fluidventils entscheidend vereinfacht und präzisiert.

Gemäß einem Ausführungsbeispiel weist der Grundkörper Einstecköffnungen für Metallkontakte auf, die zur elektrischen Kontaktierung der Spule vorgesehen sind. Dadurch können auch die Metallkontakte direkt an dem Grundkörper fixiert werden, was wiederum den Herstellungsprozess vereinfacht und präzisiert, da die Metallkontakte auch vor der anschließenden Kunststoffumspritzung bereits lagegenau am Grundkörper fixiert sind.

Gemäß einem Ausführungsbeispiel ist die Ankeraufnahme schalenartig mit einem Bodenbereich und davon abstehenden Wandungsabschnitten ausgebildet. Die Ankeraufnahme bildet zum einen den Aufnahmeraum für den Anker, zum anderen dient die Ankeraufnahme als Schnittstelle zur Fixierung des Ventilgehäuses bzw. zur Lagerung des Ventilschließkörpers.

Gemäß einem weiteren Aspekt wird ein Verfahren zur Herstellung einer Fluidventilantriebseinheit offenbart. Das Verfahren umfasst die folgenden Schritte:
- Bereitstellen eines Grundkörpers und eines Kerns;
- Bewickeln des Grundkörpers mit einem elektrischen Leiter zur Bildung einer elektrischen Spule;
- Einfügen des Kerns in den Grundkörper;
- Umspritzen des Kerns und der Spule mittels eines Spritzgießverfahrens derart, dass eine abschnittsweise Verbindung der damit entstehenden Umspritzung mit dem Grundkörper gebildet wird, wobei durch ein beim Spritzgießen verwendetes Spitzgießwerkzeug eine definierte Einfügestellung des Kerns relativ zu einer am Grundkörper vorgesehenen Ankeraufnahme hergestellt wird, wobei die Ankeraufnahme eine Lagerstelle für einen Anker aufweist, an der der Anker im montierten Zustand relativ zum Grundkörper schwenkbar gelagert ist.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand mehrerer Figuren an Ausführungsbeispielen näher erläutert. Es zeigen:
- Fig. 1: beispielhaft einen Längsschnitt durch ein Fluidventil entlang der in Fig. 2 gezeigten Schnittebene A-A;
- Fig. 2: beispielhaft einen Schnitt durch eine Antriebseinheit des Fluidventils entlang der in Fig. 1 gezeigten Schnittebene B-B;
- Fig. 3: beispielhaft eine perspektivische Ansicht eines Grundköpers der Antriebseinheit des Fluidventils;
- Fig. 4: beispielhaft eine perspektivische Ansicht des Grundköpers der Antriebseinheit des Fluidventils mit daran vorgesehener Spule und Kontaktelementen;
- Fig. 5: beispielhaft eine perspektivische Ansicht der Antriebseinheit des Grundköpers des Fluidventils mit einem darin einzuschiebenden Flachmaterialstück bzw. Kernblech, das einen Teil des geschichtet aufgebauten Kerns bildet;
- Fig. 6: beispielhaft eine perspektivische Ansicht des Grundköpers der Antriebseinheit des Fluidventils mit daran vorgesehener Spule und Kontaktelementen sowie eingeschobenen Kernblechen; und
- Fig. 7: beispielhaft ein Blockdiagramm, das die Schritte zur Herstellung einer Antriebseinheit für ein Fluidventil veranschaulicht.

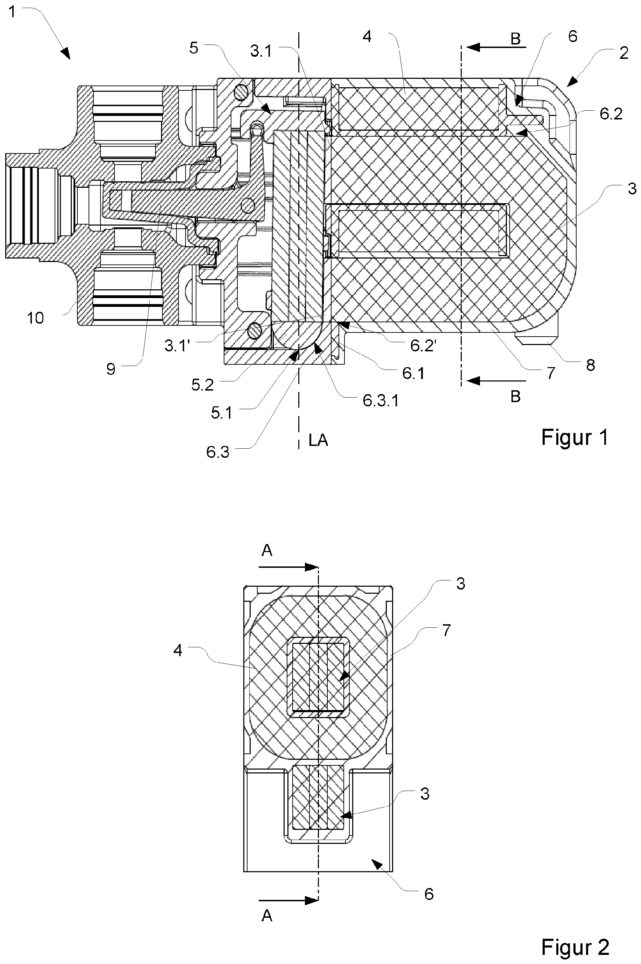

Figuren 1 und 2 zeigen jeweils eine Schnittdarstellung eines Fluidventils 1, wobei Fig. 1 eine Längsschnittdarstellung mittig durch das Fluidventil zeigt, wie dies in Fig. 2 durch die Schnittlinie A-A angedeutet ist und Fig. 2 eine senkrecht dazu verlaufende Schnittdarstellung in Querrichtung des Fluidventils 1 entlang der Schnittlinie B-B gemäß Fig. 1 zeigt.

Das Fluidventil 1 umfasst eine Antriebseinheit 2 für einen Ventilschließkörper 9 und ein Ventilgehäuse 10, in dem zumindest ein Fluidkanal vorgesehen ist. Der Ventilschließkörper 9 reicht in das Ventilgehäuse 10 hinein und ist mit der Antriebseinheit 2 derart gekoppelt, dass der Ventilschließkörper 9 durch die Antriebseinheit bewegbar, insbesondere verschwenkbar ist. Insbesondere kann der Ventilschließkörper 9 eine erste und eine zweite Schwenkstellung einnehmen, um abhängig von der Schwenkstellung eine Ventilöffnung freizugeben bzw. zu schließen. Im gezeigten Ausführungsbeispiel weist das Ventilgehäuse 10 drei Anschlüsse auf, wobei abhängig von der Schwenkstellung des Ventilschließkörpers 9 jeweils ein Paar von Anschlüssen miteinander fluidisch verbunden ist. Abweichend davon kann das Fluidventil 1 aber auch lediglich zwei Anschlüsse aufweisen, wobei abhängig von der Schwenkstellung des Ventilschließkörpers 9 eine fluidische Verbindung zwischen den Anschlüssen freigegeben wird oder nicht.

Das Fluidventil 1 weist die folgende Funktionalität auf: die Antriebseinheit 2 ist dazu ausgebildet, die Schwenkstellung eines Ankers 5 zu beeinflussen. Die Antriebseinheit 2 ist eine elektromagnetische Antriebseinheit, d.h. bei Bestromung einer Spule 4 der Antriebseinheit wird eine Magnetkraft erzeugt, mittels der der Anker 5 aus einer zweiten Schwenkstellung in eine erste Schwenkstellung bewegt wird. Diese erste Schwenkstellung ist in Fig. 1 gezeigt. Diese erste Schwenkstellung wird solange gehalten, solange die Spule 4 bestromt ist. Der Anker 5 ist vorzugsweise mittels einer Feder derart federbelastet, dass dieser nach dem Beenden des Stromflusses durch die Spule 4 in die zweite Schwenkstellung zurückbewegt wird.

Wie in Fig. 1 gezeigt, ist der Ventilschließkörper 9 mit dem Anker 5 derart gekoppelt, dass der Ventilschließkörper 9 durch den Anker 5 bewegt, insbesondere verschwenkt wird. Insbesondere nimmt der Ventilschließkörper 9 im Ventilgehäuse 10 abhängig von der Schwenkstellung des Ankers 5 eine erste oder zweite Stellung ein und definiert damit die Ventilstellung bzw. das Freigeben bzw. Verschließen eines Fluidkanals.

Nachfolgend wird der Aufbau der Antriebseinheit 2 des Fluidventils 1 näher beschrieben.

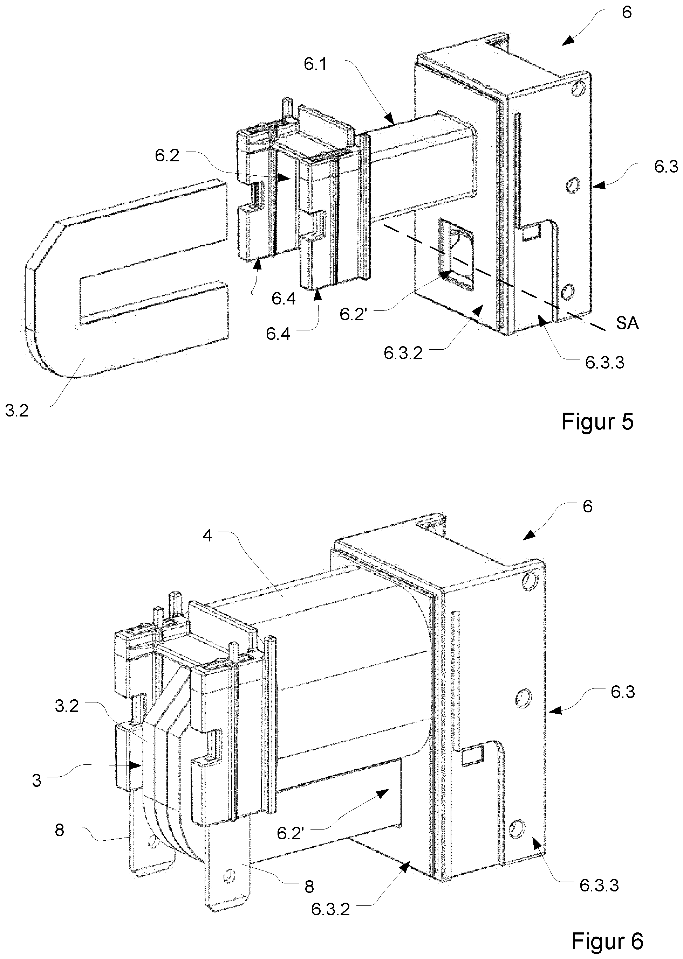

Die Antriebseinheit 2 umfasst einen Grundkörper 6. Der Grundkörper 6 bildet die tragende Grundstruktur der Antriebseinheit 2. Er ist vorzugsweise als Spitzgussteil, insbesondere als Kunststoffspritzgussteil ausgebildet. Der Grundkörper 6 weist eine rohrförmig oder im Wesentlichen rohrförmig ausgebildete Aufnahme 6.1 für die Spule 4 auf. Innerhalb der Aufnahme 6.1 ist eine erste Einschuböffnung 6.2 ausgebildet, in die ein Schenkel eines U-förmig ausgebildeten Kerns 3 einschiebbar ist, wie dies in Fig. 5 angedeutet ist.

Der Grundkörper 6 umfasst des Weiteren eine Ankeraufnahme 6.3. Diese Ankeraufnahme 6.3 schließt an die Aufnahme 6.1 unmittelbar an und ist dazu ausgebildet, den Anker 5 verschwenkbar zu lagern. Die Ankeraufnahme 6.3 ist schalenartig, insbesondere rechteckschalenartig ausgebildet und weist einen Bodenbereich 6.3.2 und mehrere Wandungsbereiche 6.3.3 auf. Die Wandungsbereiche 6.3.3 sind mit dem Bodenbereich verbunden, umgeben den Bodenbereich 6.3.2 umfangsseitig und stehen zu der von der Aufnahme 6.1 abgewandten Seite von dem Bodenbereich 6.3.2 ab.

In dem Bodenbereich 6.3.2 ist eine zweite Einschuböffnung 6.2' vorgesehen, in die ein zweiter Schenkel eines U-förmig ausgebildeten Kerns 3 einschiebbar ist, wie dies in Fig. 5 angedeutet ist. Der U-förmige Kern 3 ist damit jochartig ausgebildet, wobei ein Schenkel des Kerns durch die Spule 4 umgeben ist, so dass bei Bestromung der Spule 4 ein geschlossener magnetischer Kreis durch den Kern 3 und den die Polflächen 3.1, 3.1' des Kerns 3 überspannenden Anker 5 gebildet wird.

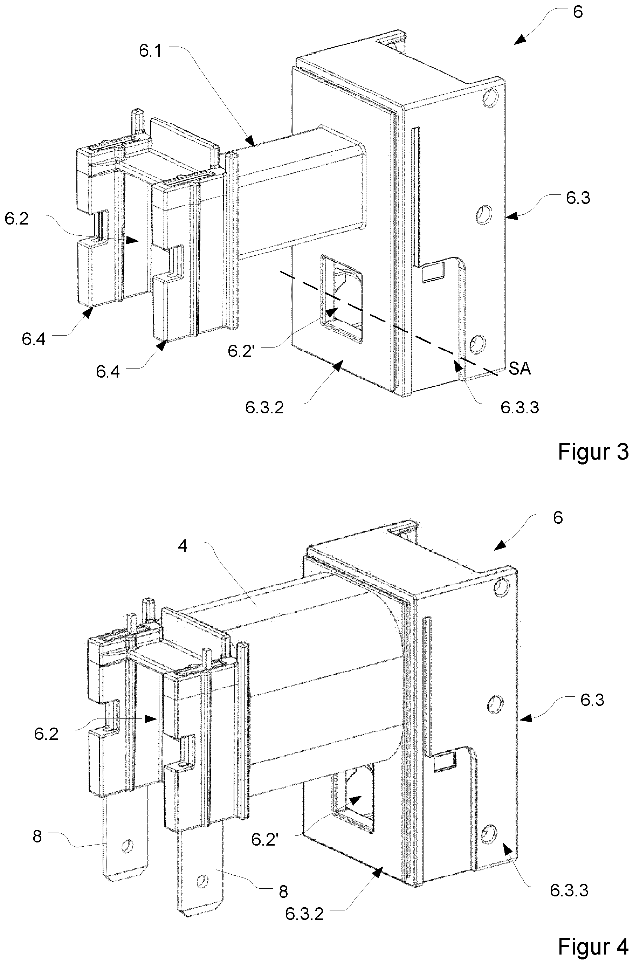

An der der Ankeraufnahme 6.3 abgewandten Seite der Aufnahme 6.1 weist der Grundkörper 6 Einschuböffnungen für Metallkontakte 8 auf. In diese Einschuböffnungen lassen sich die Metallkontakte 8 formschlüssig einsetzen. Diese sind in den Figuren 1 und 4 bis 6 gezeigt. Die Metallkontakte 8 dienen der elektrischen Kontaktierung der Spule 4.

Der Kern 3 ist im gezeigten Ausführungsbeispiel aus mehreren geschichteten Flachmaterialstücken 3.2 gebildet. Die Flachmaterialstücke 3.2 sind insbesondere Stanzteile, die aus einem metallischen Flachmaterial, insbesondere einem Metallblech hergestellt sind. Zur Bildung des Kerns 3 werden diese mit deren Flachseiten deckungsgleich übereinandergelegt, so dass ein Stapel mit mehreren Flachmaterialstücken 3.2 entsteht, der in dieser Anordnung den Kern 3 bildet (sog. geschichteter Kern). Dabei liegen die einzelnen Flachmaterialstücke 3.2 unmittelbar und elektrisch leitend gegeneinander an, so dass der geschichtete Kern die gleichen oder im Wesentlichen gleichen elektrischen Eigenschaften aufweist, wie ein einstückig gebildeter Kern. Dadurch können die Kosten zur Herstellung des Kerns 3 wesentlich gesenkt werden.

Vorzugsweise weist auch der Anker 5 einen Stapel von mehreren geschichteten Flachmaterialstücken auf. Diese werden nachfolgend als Ankerbleche bezeichnet. Die Ankerbleche sind insbesondere Stanzteile, die aus einem metallischen Flachmaterial, insbesondere einem Metallblech hergestellt sind. Zur Bildung des Ankers 5 werden diese mit deren Flachseiten deckungsgleich übereinandergelegt, so dass ein Stapel mit mehreren Ankerblechen entsteht (sog. geschichteter Anker). Dabei liegen die einzelnen Ankerbleche unmittelbar und elektrisch leitend gegeneinander an, so dass der geschichtete Anker 5 die gleichen oder im Wesentlichen gleichen elektrischen Eigenschaften aufweist, wie ein einstückig gebildeter Anker. Dadurch können die Kosten zur Herstellung des Ankers 5 wesentlich gesenkt werden.

In einer bevorzugten Ausführungsform weist der Anker 5 einen Ankerträger 5.2 auf. Dieser Ankerträger 5.2 umgibt den Stapel von geschichteten Ankerblechen zumindest abschnittsweise und fixiert diese relativ zueinander. Der Ankerträger 5.2 ist vorzugsweise ein Spritzgussteil, insbesondere ein Kunststoffspritzgussteil.

An einem freien Ende des Ankers 5 weist der Ankerträger 5.2 einen Lagerabschnitt 5.1 auf. Mittels dieses Lagerabschnitts 5.1 wird der Anker 5 in der Ankeraufnahme 6.3 des Grundkörpers 6 verschwenkbar gelagert.

Der Lagerabschnitt 5.1 weist außenumfangsseitig eine im Querschnitt kreisbogenförmig ausgebildete Gleitfläche auf, so dass eine Gleitlagerstelle gebildet wird. Die Gleitfläche liegt formschlüssig an einer konkaven, invers zum Lagerabschnitt 5.1 geformten Lagerstelle 6.3.1 der Ankeraufnahme 6.3 an. Dadurch kann der Anker 5 um eine Schwenkachse SA verschwenkt werden, die parallel zu einer Ebene verläuft, in der die Polflächen 3.1, 3.1' des Kerns angeordnet sind, bzw. die (Schwenkachse SA) senkrecht zur Längsachse LA des Ankers 5 verläuft. Damit kann der Anker 5 von der in Fig. 1 gezeigten oberen Polfläche 3.1 hin bzw. von dieser weg geschwenkt werden.

Um eine möglichst hohe Magnetkraft auf den Anker 5 aufbringen zu können und einen reproduzierbaren Schaltvorgang des Fluidventils 1 ohne Nachjustierung bzw. Einstellarbeiten nach dem Herstellungsprozess erreichen zu können, ist eine möglichst exakte Positionierung des Kerns 3 innerhalb des Grundkörpers 6 vorteilhaft. Insbesondere ist es vorteilhaft, beim Herstellungsprozess die Einschiebeposition des Kerns 3 in den Grundkörper 6 möglichst exakt und reproduzierbar festzulegen, da dadurch die Lage der Polfächen 3.1, 3.1' relativ zur Lagerstelle 6.3.1 der Ankeraufnahme 6.3 und damit auch zum Anker 5 festgelegt wird.

Zur Fixierung des Kerns 3 bzw. des den Kern 3 bildenden Flachmaterialstücke 3.2 relativ zum Grundkörper 6 wird der von der Ankeraufnahme 6.3 abstehende Teil des Grundkörpers 6 mit dem eingeschobenen Kern 3 und der Spule 4 zumindest abschnittsweise umspritzt. Dadurch wird zum einen die Einschubposition des Kerns 3 bzw. des den Kern 3 bildenden Flachmaterialstücke 3.2 relativ zum Grundkörper 6 fixiert, um anderen der Kern 3 bzw. die Spule 4 elektrisch isolierend eingehaust.

Vorzugsweise erfolgt die Justierung der Einschubposition des Kerns 3 derart, dass die Ankeraufnahme 6.3 und die Polfächen 3.1, 3.1' gegenüber Anlagebereichen des Spritzgusswerkzeugs, das für die Umspritzung verwendet wird, zur Anlage gelangen. Dadurch wird eine reproduzierbare Einschubposition des Kerns 3 in den Grundkörper 6 und damit eine exakte Justierung der Position der Polfächen 3.1, 3.1' relativ zur Lagerstelle 6.3.1 der Ankeraufnahme 6.3 erreicht.

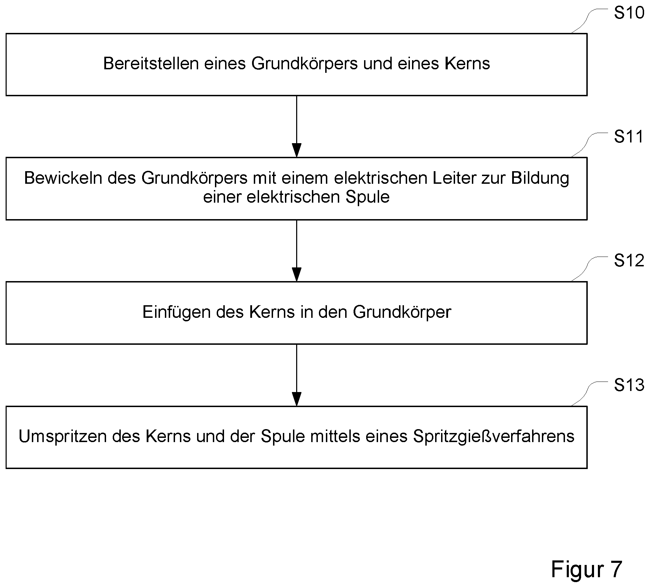

Nachfolgend werden anhand des Ablaufdiagramms gemäß Fig. 7 die Schritte des Verfahrens zur Herstellung des Fluidventils 1 beschrieben.

Zunächst wird ein Grundkörper 6 und ein Kern 3 bereitgestellt (S10). Für den Fall, dass der Kern 3 aus mehreren Flachmaterialstücken 3.2 gebildet wird, werden diese Flachmaterialstücke 3.2 bereitgestellt.

Anschließend wird die Aufnahme 6.1 des Grundkörpers 6 mit einem elektrischen Leiter bewickelt, um eine elektrische Spule 4 am Grundkörper 6 herzustellen (S11).

Nach der Herstellung der Spule 4 erfolgt das Einfügen des Kerns 3 in den Grundkörper 6 (S12). Dabei wird der Kern von der der Ankeraufnahme 6.3 abgewandten Seite in die am Grundkörper 6 gebildete zumindest eine Einschuböffnung 6.2, 6.2' eingeschoben. Vorzugsweise werden mehrere den Kern 3 bildende Flachmaterialstücke 3.2 in den Grundkörper 6 eingefügt, und zwar derart, dass sie stapelartig und deckungsgleich nebeneinander zu liegen kommen.

Nach dem Einfügen des Kerns 3 bzw. der den Kern 3 bildenden Flachmaterialstücke 3.2 erfolgt ein Umspritzen des Kerns 3 und der Spule 4 mittels eines Spritzgießverfahrens (S13). Dadurch wird eine abschnittsweise Verbindung der durch den Spritzgießvorgang entstehenden Umspritzung 7 mit dem Grundkörper 6 gebildet und damit die Einschubstellung des Kerns 3 im Grundkörper 6 dauerhaft fixiert. Bei dem Spritzgießvorgang wird ein Spitzgießwerkzeug verwendet, das derart ausgebildet ist, dass eine definierte Einfügestellung des Kerns 3 relativ zu der am Grundkörper 6 vorgesehenen Ankeraufnahme 6.3 hergestellt wird. Insbesondere weist das Spitzgießwerkzeug eine definierte Anlagefläche für die Ankeraufnahme 6.3 des Grundkörpers 6 und eine Anlagefläche für die Polflächen 3.1, 3.1' des Kerns 3 auf, so dass bedingt durch das Spritzgießwerkzeug der Kern 3 stets eine definierte Lage zu der Ankeraufnahme 6.3 bzw. der daran ausgebildeten Lagerstelle 6.3.1 des Ankers einnimmt.

Die Erfindung wurde voranstehend an Ausführungsbeispielen beschrieben. Es versteht sich, dass zahlreiche Änderungen sowie Abwandlungen möglich sind, ohne dass dadurch der durch die Patentansprüche definierte Schutzbereich verlassen wird.

### Bezugszeichenliste

- 1: Fluidventil
- 2: Antriebseinheit
- 3: Kern
- 3.1, 3.1': Polfläche
- 3.2: Flachmaterialstück
- 4: Spule
- 5: Anker
- 5.1: Lagerabschnitt
- 5.2: Ankerträger
- 6: Grundkörper
- 6.1: Aufnahme
- 6.2: erste Einschuböffnung
- 6.2': zweite Einschuböffnung
- 6.3: Ankeraufnahme
- 6.3.1: Lagerstelle
- 6.3.2: Bodenbereich
- 6.3.3: Wandungsabschnitt
- 6.4: Einstecköffnung
- 7: Umspritzung
- 8: Metallkontakt
- 9: Ventilschließkörper
- 10: Ventilgehäuse
- LA: Längsachse des Ankers
- SA: Schwenkachse des Ankers

## Patentansprüche

1. Fluidventil umfassend eine Antriebseinheit (2) für einen Ventilschließkörper (9), wobei die Antriebseinheit (2) einen Kern (3), eine abschnittsweise den Kern (3) umgebende elektrische Spule (4) und einen durch die Bestromung der Spule (4) und die daraus resultierende Magnetkraft bewegbaren Anker (5) aufweist, wobei die Antriebseinheit (2) einen Grundkörper (6) aufweist, an dem eine Aufnahme (6.1) für die Spule (4), zumindest eine Einschuböffnung (6.2) für den Kern (3) und eine Ankeraufnahme (6.3) vorgesehen ist und wobei der in die zumindest eine Einschuböffnung (6.2) eingeführte Kern (3) mittels einer Umspritzung (7) derart am Grundkörper (6) fixiert ist, dass der Kern (3) eine definierte Lage relativ zur Ankeraufnahme (6.3) einnimmt, **dadurch gekennzeichnet, dass** die Ankeraufnahme (6.3) eine Lagerstelle (6.3.1) für den Anker (5) aufweist, an der der Anker (5) relativ zum Grundkörper (6) schwenkbar gelagert ist.

2. Fluidventil nach Anspruch 1, **dadurch gekennzeichnet, dass** der Kern (3) durch die Umspritzung (7) derart gegen eine Verschiebung relativ zum Grundkörper (6) gesichert ist, dass die zumindest eine Polfäche (3.1, 3.1`) des Kerns (3) eine vorgegebene Lage relativ zu der Ankeraufnahme (6.3) einnimmt.

3. Fluidventil nach Anspruch 1 oder 2, **dadurch gekennzeichnet, dass** die Umspritzung (7) den Kern (3) und die Spule (4) haubenartig umgibt und eine Verbindung mit dem Grundkörper (6) herstellt.

4. Fluidventil nach einem der vorhergehenden Ansprüche, **dadurch gekennzeichnet, dass** der Kern (3) U-förmig ausgebildet ist.

5. Fluidventil nach einem der vorhergehenden Ansprüche, **dadurch gekennzeichnet, dass** der Anker (5) ein Paar von Polflächen (3.1, 3.1') des Kerns (3) überspannt und durch die Bestromung der Spule (4) um eine senkrecht zur Längsachse (LA) des Ankers (5) verlaufende Schwenkachse (SA) verschwenkbar ist.

6. Fluidventil nach einem der vorhergehenden Ansprüche, **dadurch gekennzeichnet, dass** der Kern (3) durch mehrere geschichtet und deckungsgleich angeordnete, metallische Flachmaterialstücke (3.2) gebildet ist.

7. Fluidventil nach Anspruch 6, **dadurch gekennzeichnet, dass** die Flachmaterialstücke (3.2) Stanzblechteile sind.

8. Fluidventil nach Anspruch 6 oder 7, **dadurch gekennzeichnet, dass** die Flachmaterialstücke (3.2) des Kerns (3) elektrisch leitend gegeneinander anliegen.

9. Fluidventil nach einem der vorhergehenden Ansprüche, **dadurch gekennzeichnet, dass** die Lagerstelle (6.3.1) eine Gleitlagerstelle ist, die ein Flächenlager für einen kreisbogenförmigen Lagerabschnitt (5.1) des Ankers (5) bildet.

10. Fluidventil nach einem der vorhergehenden Ansprüche, **dadurch gekennzeichnet, dass** der Grundkörper (6) durch ein Kunststoffspritzgussteil gebildet ist.

11. Fluidventil nach einem der vorhergehenden Ansprüche, **dadurch gekennzeichnet, dass** der Grundkörper (6) einen rohrförmig ausgebildeten Einführabschnitt für den Kern (3) aufweist, in den der Kern (3) abschnittsweise einschiebbar ist, wobei der Einführabschnitt zudem die Aufnahme (6.1) bildet, auf die die Wicklung der Spule (4) aufgebracht ist.

12. Fluidventil nach einem der vorhergehenden Ansprüche, **dadurch gekennzeichnet, dass** der Grundkörper (6) Einstecköffnungen (6.4) für Metallkontakte (8) aufweist, die zur elektrischen Kontaktierung der Spule (4) vorgesehen sind.

13. Fluidventil nach einem der vorhergehenden Ansprüche, **dadurch gekennzeichnet, dass** die Ankeraufnahme (6.3) schalenartig mit einem Bodenbereich (6.3.2) und davon abstehenden Wandungsabschnitten (6.3.3) ausgebildet ist.

14. Verfahren zur Herstellung einer Fluidventilantriebseinheit umfassend folgende Schritte:
- Bereitstellen eines Grundkörpers (6) und eines Kerns (3);
- Bewickeln des Grundkörpers (6) mit einem elektrischen Leiter zur Bildung einer elektrischen Spule (4);
- Einfügen des Kerns (3) in den Grundkörper (6);
- Umspritzen des Kerns (3) und der Spule (4) mittels eines Spritzgießverfahrens derart, dass eine abschnittsweise Verbindung der damit entstehenden Umspritzung (7) mit dem Grundkörper (6) gebildet wird, wobei durch ein beim Spritzgießen verwendetes Spitzgießwerkzeug eine definierte Einfügestellung des Kerns (3) relativ zu einer am Grundkörper (6) vorgesehenen Ankeraufnahme (6.3) hergestellt wird, wobei die Ankeraufnahme (6.3) eine Lagerstelle (6.3.1) für einen Anker (5) aufweist, an der der Anker (5) im montierten Zustand relativ zum Grundkörper (6) schwenkbar gelagert ist.

## Claims

1. Fluid valve comprising a drive unit (2) for a valve closing body (9), the drive unit (2) comprising a core (3), an electric coil (4) which partially surrounds the core (3), and an armature (5) which can be moved by the energization of the coil (4) and the resulting magnetic force, the drive unit (2) comprising a main body (6), on which a support (6.1) for the coil (4), at least one insertion opening (6.2) for the core (3) and an armature support (6.3) are provided, and the core (3) inserted into the at least one insertion opening (6.2) being fixed to the main body (6) by means of an overmold (7) in such a way that the core (3) assumes a defined position relative to the armature support (6.3), **characterized in that** the armature support (6.3) comprises a bearing section (6.3.1) for the armature (5) at which the armature (5) is pivotably mounted relative to the main body (6).

2. Fluid valve according to claim 1, **characterized in that** the core (3) is secured against a shift relative to the main body (6) by the overmold (7) in such a way that the at least one pole face (3.1, 3.1') of the core (3) assumes a predetermined position relative to the armature support (6.3).

3. Fluid valve according to claim 1 or 2, **characterized in that** the overmold (7) surrounds the core (3) and the coil (4) in a hood-like manner and establishes a connection to the main body (6).

4. Fluid valve according to any one of the preceding claims, **characterized in that** the core (3) is U-shaped.

5. Fluid valve according to any one of the preceding claims, **characterized in that** the armature (5) spans a pair of pole faces (3.1, 3.1') of the core (3) and, due to the energization of the coil (4), the armature (5) is pivotable about a pivot axis (SA) extending perpendicularly to the longitudinal axis (LA) of the armature (5).

6. Fluid valve according to any one of the preceding claims, **characterized in that** the core (3) is formed by a plurality of metallic flat material pieces (3.2) arranged in a layered and congruent fashion.

7. Fluid valve according to claim 6, **characterized in that** the flat material pieces (3.2) are punching sheet parts.

8. Fluid valve according to claim 6 or 7, **characterized in that** the flat material pieces (3.2) of the core (3) are in abutment against one another in an electrically conductive manner.

9. Fluid valve according to any one of the preceding claims, **characterized in that** the bearing section (6.3.1) is a slide bearing section which forms a surface bearing for a bearing portion (5.1) of the armature (5) that has the shape of a circular arc.

10. Fluid valve according to any one of the preceding claims, **characterized in that** the main body (6) is formed by a plastics injection molded part.

11. Fluid valve according to any one of the preceding claims, **characterized in that** the main body (6) comprises a tubular insertion portion for the core (3), into which the core (3) can be partially inserted, the insertion portion also forming the support (6.1) to which the winding of the coil (4) is applied.

12. Fluid valve according to any one of the preceding claims, **characterized in that** the main body (6) comprises insertion openings (6.4) for metal contacts (8) which are provided for making electrical contact with the coil (4).

13. Fluid valve according to any one of the preceding claims, **characterized in that** the armature support (6.3) comprises a box-like shape with a bottom region (6.3.2) and wall portions (6.3.3) projecting therefrom.

14. Method for manufacturing a fluid valve drive unit comprising the following steps:
- providing a main body (6) and a core (3);
- winding an electrical conductor around the main body (6) to form an electric coil (4);
- inserting the core (3) into the main body (6);
- overmolding the core (3) and the coil (4) by means of an injection molding process so as to form a partial connection of the resulting overmold (7) to the main body (6), wherein a defined insertion position of the core (3) relative to an armature support (6.3) provided on the main body (6) is established by an injection'-molding tool used during injection molding, wherein the armature support (6.3) comprises a bearing section (6.3.1) for an armature (5), where the armature (5) is pivotably mounted relative to the main body (6) in an assembled state.

## Revendications

1. Vanne à fluide comprenant une unité d'entraînement (2) pour un corps de fermeture de vanne (9), l'unité d'entraînement (2) présentant un noyau (3), une bobine électrique (4) entourant localement le noyau (3) et un induit (5) pouvant être déplacé par l'alimentation électrique de la bobine (4) et par la force magnétique qui en résulte, l'unité d'entraînement (2) présentant un corps de base (6) sur lequel sont prévus un logement (6.1) pour la bobine (4), au moins une ouverture d'insertion (6.2) pour le noyau (3) et un logement d'induit (6.3), et le noyau (3) inséré dans ladite au moins une ouverture d'insertion (6.2) étant fixé au corps de base (6) au moyen d'un surmoulage (7) de telle sorte que le noyau (3) prend une position définie par rapport au logement d'induit (6.3),
**caractérisée en ce que** le logement d'induit (6.3) présente un point d'appui (6.3.1) pour l'induit (5), sur lequel l'induit (5) est appuyé de manière à pouvoir pivoter par rapport au corps de base (6).

2. Vanne à fluide selon la revendication 1,
**caractérisée en ce que** le noyau (3) est bloqué par le surmoulage (7) à l'encontre d'un déplacement par rapport au corps de base (6) de telle sorte qu'au moins une surface polaire (3.1, 3.1') du noyau (3) prend une position prédéfinie par rapport au logement d'induit (6.3).

3. Vanne à fluide selon la revendication 1 ou 2,
**caractérisée en ce que** le surmoulage (7) entoure le noyau (3) et la bobine (4) à la manière d'un capot et établit une liaison avec le corps de base (6).

4. Vanne à fluide selon l'une des revendications précédentes,
**caractérisée en ce que** le noyau (3) est réalisé en forme de U.

5. Vanne à fluide selon l'une des revendications précédentes,
**caractérisée en ce que** l'induit (5) enjambe une paire de surfaces polaires (3.1, 3.1') du noyau (3) et peut pivoter autour d'un axe de pivotement (SA) perpendiculaire à l'axe longitudinal (LA) de l'induit (5) sous l'effet de l'alimentation électrique de la bobine (4).

6. Vanne à fluide selon l'une des revendications précédentes,
**caractérisée en ce que** le noyau (3) est formé par plusieurs pièces de matériau plat (3.2) métalliques disposées en couches et coïncidant les unes avec les autres.

7. Vanne à fluide selon la revendication 6,
**caractérisée en ce que** les pièces de matériau plat (3.2) sont des pièces de tôle découpée.

8. Vanne à fluide selon la revendication 6 ou 7,
**caractérisée en ce que** les pièces de matériau plat (3.2) du noyau (3) sont en contact électriquement conducteur les unes avec les autres.

9. Vanne à fluide selon l'une des revendications précédentes,
**caractérisée en ce que** le point d'appui (6.3.1) est un point d'appui glissant qui forme un appui surfacique pour une portion d'appui (5.1) en arc de cercle de l'induit (5).

10. Vanne à fluide selon l'une des revendications précédentes,
**caractérisée en ce que** le corps de base (6) est formé par une pièce en matière plastique moulée par injection.

11. Vanne à fluide selon l'une des revendications précédentes,
**caractérisée en ce que** le corps de base (6) présente une portion d'insertion de forme tubulaire pour le noyau (3), dans laquelle le noyau (3) peut être inséré localement, la portion d'insertion formant en outre le logement (6.1) sur lequel est monté l'enroulement de la bobine (4).

12. Vanne à fluide selon l'une des revendications précédentes,
**caractérisée en ce que** le corps de base (6) présente des ouvertures d'enfichage (6.4) pour des contacts métalliques (8) qui sont prévus pour la mise en contact électrique de la bobine (4).

13. Vanne à fluide selon l'une des revendications précédentes,
**caractérisée en ce que** le logement d'induit (6.3) est réalisé en forme de coque avec une zone de fond (6.3.2) et des portions de paroi (6.3.3) qui en dépassent.

14. Procédé de fabrication d'une unité d'entraînement de vanne à fluide, comprenant les étapes suivantes consistant à :
- fournir un corps de base (6) et un noyau (3) ;
- enrouler sur le corps de base (6) un conducteur électrique pour former une bobine électrique (4) ;
- insérer le noyau (3) dans le corps de base (6) ;
- surmouler le noyau (3) et la bobine (4) au moyen d'un procédé de moulage par injection de telle sorte qu'une liaison locale du surmoulage (7) ainsi créé est formée avec le corps de base (6), une position d'insertion définie du noyau (3) par rapport à un logement d'induit (6.3) prévu sur le corps de base (6) étant réalisée par un outil de moulage par injection utilisé lors du moulage par injection, le logement d'induit (6.3) présentant un point d'appui (6.3.1) pour un induit (5), sur lequel l'induit (5), dans l'état monté, est appuyé de manière à pouvoir pivoter par rapport au corps de base (6).
